Europäisches Patentamt

European Patent Office

Office européen des brevets

(19)

(11) Numéro de publication : **0 398 800 B1**

(12) **FASCICULE DE BREVET EUROPEEN**

(45) Date de publication du fascicule du brevet :
**23.06.93 Bulletin 93/25**

(21) Numéro de dépôt : **90401294.5**

(22) Date de dépôt : **16.05.90**

(51) Int. Cl.⁵ : **F16N 29/00**

(54) **Capteur de particules avec détection électronique.**

(30) Priorité : **18.05.89 FR 8906491**

(43) Date de publication de la demande :
**22.11.90 Bulletin 90/47**

(45) Mention de la délivrance du brevet :
**23.06.93 Bulletin 93/25**

(84) Etats contractants désignés :
**DE ES FR GB IT**

(56) Documents cités :
**FR-A- 2 159 757**
**FR-A- 2 564 897**
**GB-A- 1 241 204**
**GB-A- 2 190 503**
**US-A- 2 671 200**
**US-A- 3 404 337**

(73) Titulaire : **SOCIETE NATIONALE D'ETUDE ET DE CONSTRUCTION DE MOTEURS D'AVIATION, "S.N.E.C.M.A."**
**2, Boulevard du Général Martial Valin**
**F-75015 Paris (FR)**

(72) Inventeur : **Bares, Jean-Paul, Yvon**
**47 Rue de la Vierge, Villiers Saint Frédéric**
**F-78640 Neauphle le Chateau (FR)**
Inventeur : **Blanchard, Eric, Yves**
**Résidence les Lions, 7 avenue Simon Vouet**
**F-78560 Le Port Marly (FR)**

(74) Mandataire : **Moinat, François et al**
**S.N.E.C.M.A. Service des Brevets Boîte Postale 81**
**F-91003 Evry Cédex (FR)**

EP 0 398 800 B1

Jouve, 18, rue Saint-Denis, 75001 PARIS

## Description

L'invention concerne le domaine de la lubrification des machines et plus spécialement un bouchon magnétique destiné à retenir, au moyen d'un aimant permanent, des particules métalliques entraînées par l'huile de lubrification et résultant de l'usure de pièces en mouvement. Un tel bouchon magnétique, qui peut être combiné avec un filtre, est bien connu, par exemple par le FR-B-2 159 757 de la Société Demanderesse. Toutefois, les dispositifs de l'art antérieur nécessitent des visites successives pour vérifier l'état d'encrassement des bouchons magnétiques.

C'est pourquoi il a déjà été proposé, notamment par le FR-A-2 564 897, de disposer, à proximité de l'aimant permanent, de part et d'autre de celui-ci, deux électrodes, dont l'une au moins est électriquement isolée, de telle sorte que les particules métalliques entraînées par l'huile de lubrification s'accumulent entre les électrodes et y réalisent un court-circuit. Celui-ci est détecté à distance au moyen d'une liaison électrique par fils. Malheureusement cette dernière est soumise à de grandes contraintes mécaniques au moment des opérations de montage-démontage du bouchon, elle présente des risques de défauts de contact et d'oublis à l'occasion du remontage, elle ne constitue pas, de ce fait, une solution suffisamment fiable. Il en est de même pour la solution proposée par le GB-A-2 190 503 qui, au lieu de détecter un court-circuit, permet de mesurer la variation de reluctance d'un circuit magnétique perturbé par les particules métalliques. Cette méthode met également en oeuvre une liaison par fils.

L'invention a pour objet un détecteur qui permet de transmettre une information lorsque l'encrassement de l'aimant du bouchon magnétique dépasse un certain seuil, la transmission de cette information à partir du bouchon magnétique amovible se faisant sans faire appel à une liaison par fils.

Pour obtenir ce résultat, le bouchon magnétique amovible conforme à l'invention comporte, de manière connue, d'une part, un aimant permanent destiné à retenir les particules métalliques entraînées par l'huile et résultant de l'usure de pièces en mouvement avec lesquelles l'huile a été en contact et, d'autre part, deux électrodes placées de part et d'autre de l'aimant permanent, et dont l'un au moins est électriquement isolé, de telle sorte que les particules métalliques entraînées par l'huile de lubrification s'accumulent entre les électrodes et soient susceptibles de réaliser entre celles-ci une liaison électrique.

Selon la caractéristique essentielle de l'invention, le bouchon magnétique amovible supporte un premier bobinage dont les extrémités sont reliées auxdites électrodes, ledit premier bobinage étant couplé inductivement à un second bobinage supporté par le carter de la machine et dont les variations de l'inductance dues à l'accumulation de particules métalliques entre les électrodes sont détectées par un appareillage électronique auquel le second bobinage est relié.

Suivant une forme de mise en oeuvre préférée, les variations d'inductance du second bobinage sont détectées par un appareillage électronique constitué d'une boucle d'asservissement comportant un oscillateur contrôlé en tension dont la fréquence est asservie de manière à correspondre à la résonnance d'un circuit LC incorporant le second bobinage, la tension de commande de l'oscillateur contrôlé étant également utilisée pour la commande d'une signalisation.

Dans une forme de réalisation avantageuse, l'aimant permanent est un barreau cylindrique recouvert par les deux électrodes qui ne sont séparées l'une de l'autre que par un espace annulaire de faible largeur dont le profil est adapté pour favoriser l'accumulation des particules métalliques.

Par ailleurs, un bon couplage est obtenu entre les deux bobinages en plaçant ceux-ci sur des carcasses en un matériau ayant une forte perméabilité magnétique, placées en regard l'une de l'autre respectivement sur le bouchon amovible et sur le carter de la machine.

L'invention sera mieux comprise à la lumière de la description qui va suivre, donnée à titre d'exemple non limitatif, en se référant aux dessins annexés dans lesquels :
  - la figure 1 rappelle le principe des bouchons magnétiques pour circuit de lubrification,
  - la figure 2 schématise le principe du détecteur conforme à l'invention,
  - la figure 3 illustre en détails un bouchon magnétique conforme à l'invention,
  - la figure 4 montre d'une manière synoptique un appareillage électronique pouvant être utilisé pour la mise en oeuvre de l'invention.

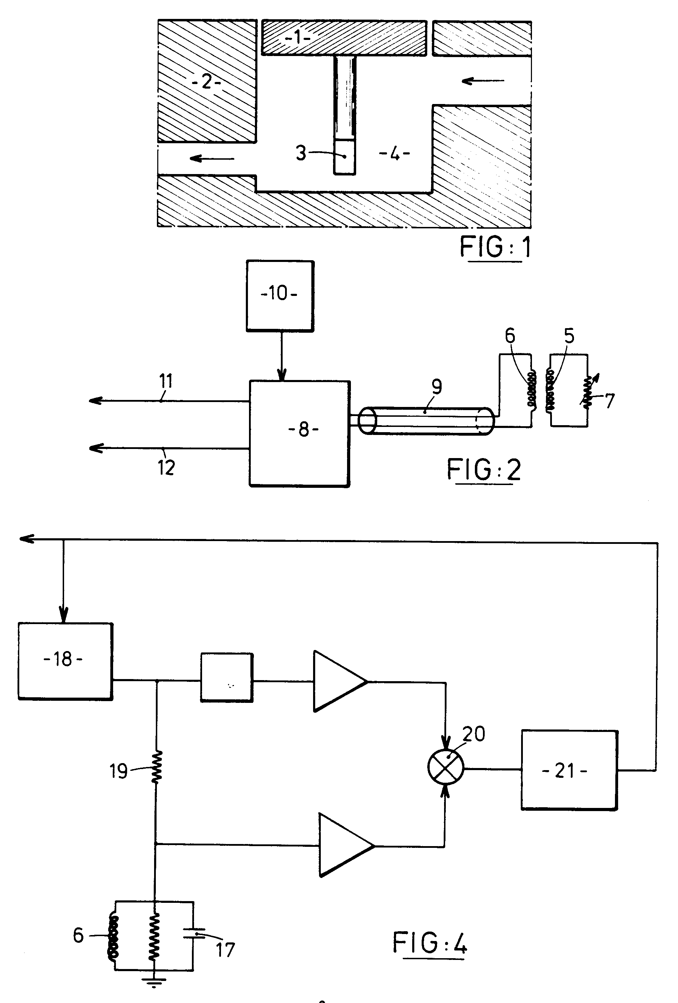

La figure 1 montre un bouchon magnétique 1 de type connu, fixé au carter 2 d'une machine comportant des pièces en mouvement. Ce bouchon magnétique comporte un aimant permanent 3 plongé dans le circuit de lubrification 4 de ladite machine. Ainsi, les particules métalliques qui proviennent de l'usure des pièces en mouvement et qui sont entraînées par l'huile de lubrification sont retenues par ledit aimant. L'inspection de celui-ci donne donc des informations importantes sur l'état d'usure de certaines pièces de la machine. L'invention a pour objet de transmettre automatiquement une information concernant l'état d'encrassement du bouchon magnétique par les particules métalliques. A cet effet, la transmission de l'information se fait par couplage inductif selon le schéma de la figure 2.

Le bouchon, c'est à dire la partie amovible, comporte un premier bobinage 5 étroitement couplé inductivement à un second bobinage 6 porté par la partie fixe c'est à dire le carter 2 de la machine. Le bobinage 5 du bouchon est électriquement refermé sur une résistance variable 7. Lorsque la résistance 7 a une valeur infinie, c'est à dire lorsque le circuit est ouvert, l'inductance vue du côté du bobinage 6 est l'inductance propre de ce bobinage. En revanche, lorsque le circuit est fermé sur une résistance 7 de valeur nulle, l'inductance vue du côté du bobinage 6 est égale à l'inductance de ce bobinage diminuée de la valeur de l'inductance mutuelle. Vue du côté du bobinage 6, les variations de la résistance 7 sont ramenées à des variations d'inductance. Ces variations d'inductance sont exploitées au moyen d'un appareillage électronique 8 auquel le bobinage 6 est relié par un câble 9 qui peut être coaxial au bifilaire. L'appareillage électronique 8 sera décrit plus en détails ci-après en regard de la figure 4, il comporte principalement une boucle d'asservissement assurant la transformation inductance/tension. Il est alimenté par une source régulée 10, et peut comporter une sortie 11 soit pour un indicateur visuel soit pour une liaison directe avec un calculateur et une sortie 12 pour un détecteur de panne susceptible de signaler les défaillances du dispositif, notamment les coupures de circuit.

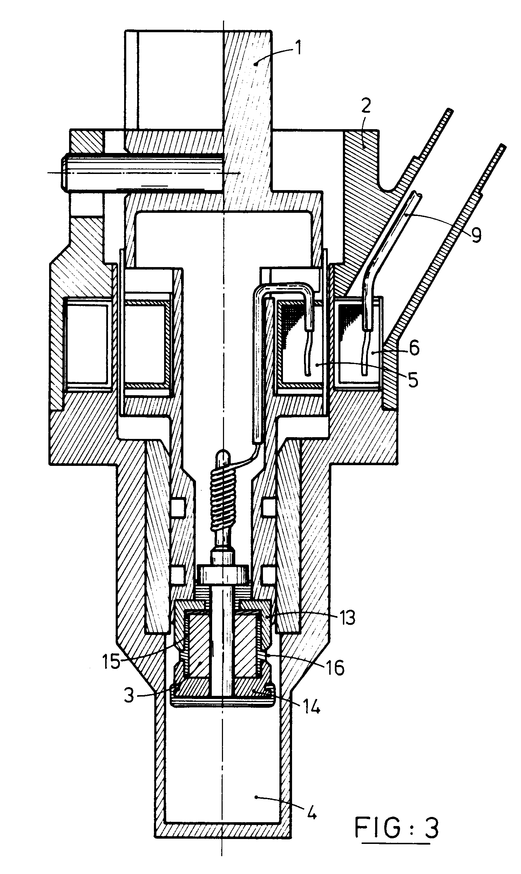

Le bouchon magnétique 1 et le système de couplage sont représentés plus en détails à la figure 3. Sur la partie amovible on a schématiquement représenté le premier bobinage 5, tandis que, en regard, sur le carter 2 de la machine, est représenté le second bobinage 6. L'aimant permanent 3, plongé dans le circuit de lubrification 4, supporte deux électrodes 13 et 14 reliées, de manière non visible sur la figure, aux extrémités du bobinage 5. Afin que ces électrodes 13 et 14 ne soient pas en court-circuit une enveloppe 15 en matériau isolant recouvre, au moins en partie, l'aimant permanent 3. Les électrodes 13 et 14 délimitent un espace annulaire 16 dans lequel viennent s'accumuler progressivement les particules métalliques entraînées par l'huile de lubrification. A partir d'un certain encrassement de cet espace, la résistance électrique entre les deux électrodes diminue considérablement et peut être détectée comme précisé ci-dessus, les particules métalliques constituant la résistance variable 7 envisagée pour faciliter les explications.

La forme de l'espace annulaire 16 qui sépare les électrodes 13 et 14 doit être étudiée pour former l'accumulation des particules à cet endroit. Notamment les bords des électrodes peuvent être chanfreinés comme représenté.

Les bobinages 5 et 6 sont supportés par des carcasses qui doivent conduire le flux d'induction, elles seront donc réalisées en un matériau ayant une très forte perméabilité magnétique, tel le mumétal. La seconde fonction des carcasses étant de permettre le bobinage du fil, il est nécessaire, pour le bobinage 6 intégré au carter 2 de prévoir une seconde carcasse en un matériau ne perturbant pas l'induction, en polytétrafluoréthylène par exemple.

Dans le dispositif électronique représenté de manière synoptique à la figure 4, le bobinage 5, d'inductance L, placé sur le carter est associé à un condensateur 17, de capacité C. Le but de l'asservissement proposé est de maintenir la fréquence d'un oscillateur 18 telle que le circuit LC demeure accordé malgré les variations de l'inductance L. Ainsi, pour toute variation d'inductance, la fréquence de sortie fo de l'oscillateur contrôlé en tension 18 va varier de manière à ce que la relation

$$\omega_o^2 = \frac{1}{LC}$$

avec

$$\omega_o = 2\,\pi\,fo$$

soit toujours vérifiée.

En régime stationnaire l'asservissement est stable. En effet, pour ce régime, les tensions de part et d'autre de la résistance 19 placée entre la sortie de l'oscillateur 18 et le circuit LC sont en phases. Le signal obtenu à la sortie d'un mélangeur 20 relié aux bornes de la résistance 19, par l'intermédiaire d'un déphaseur $\pi$ /2, du côté de l'oscillateur, est de la forme :

$$\cos(\omega ot)\cos\left(\omega ot + \frac{\pi}{2}\right) = \frac{1}{2}\cos(2\,\omega ot)$$

Ce signal n'ayant pas de composante continue, il ne modifie pas, après passage dans un intégrateur 21, la valeur de la tension de commande de l'oscillateur 18. Lorsque l'inductance varie, la relation $\omega_o^2 = \frac{1}{LC}$ n'est plus vérifiée et les signaux aux bornes de 18 ne sont plus en phase. C'est l'exploitation de ce déphasage D qui assure l'asservissement. Le signal en sortie du mélangeur 20 s'écrit alors :

$$\cos\left(\omega t + \frac{\pi}{2}\right)\cos\left(\omega_o t + D\right) = \frac{1}{2}\left[\cos\left(2\,\omega_o t + \frac{\pi}{2} + D\right) + \sin(D)\right]$$

Après l'intégration 21, seul le déphasage est pris en compte et modifie la valeur de la fréquence jusqu'à ce que la valeur du déphasage D soit minimale.

La tension de commande de l'oscillateur 18 est donc représentative de l'inductance L. Elle peut être utilisée pour signaler les variations de celle-ci, donc de l'encrassement du bouchon.

Un capteur comprenant des bobinages est suceptible de présenter des pannes. Il est donc utile de concevoir une détection de panne.

Les pannes les plus courantes dans un bobinage sont : soit des court-circuits, 2 fils se touchent, soit des circuits ouverts, rupture du chemin électrique.

Pour le bobinage fixe 6, on peut détecter les deux types de panne par variation de la fréquence de l'oscillateur 18.

Pour le bobinage amovible 5, l'utilisateur sera à même de détecter un court-circuit, si après avoir nettoyé le bouchon l'indicateur se trouve toujours en position de court-circuit.

Pour la détection de circuit ouvert du bobinage 5, il est nécessaire de rajouter une résistance en parallèle sur les bornes dudit bobinage 5.

Le dispositif détecteur qui vient d'être décrit trouve son emploi sur toutes les machines pour lesquelles il est important de signaler rapidement toute usure anormale. Il trouvera notamment son utilisation sur les turbomachines aéronautiques. Sur ces dernières, l'utilisation de plusieurs bouchons magnétiques de ce type, sur les différents circuits d'huile, peut prévenir une panne aux conséquences graves mais aussi peut permettre de localiser rapidement la pièce dont l'usure devient prohibitive.

**Revendications**

1. Détecteur de particules placé sur un bouchon magnétique (1) amovible, plongé dans un circuit d'huile (4) d'une machine, comportant, d'une part, un aimant permanent (3) destiné à retenir les particules métalliques entraînées par l'huile et résultant de l'usure de pièces en mouvement avec lesquelles l'huile a été en contact et, d'autre part, deux électrodes (13,14) placées de part et d'autre de l'aimant permanent, et dont l'une au moins est électriquement isolée, de telle sorte que les particules métalliques entraînées par l'huile de lubrification s'accumulent entre les électrodes et soient susceptibles de réaliser entre celles-ci une liaison électrique, caractérisé en ce que, le bouchon magnétique amovible supporte un premier bobinage (5) dont les extrémités sont reliées auxdites électrodes (13-14), ledit premier bobinage (5) étant couplé inductivement à un second bobinage (6) supporté par le carter (2) de la machine et dont les variations d'inductances dues à l'accumulation de particules métalliques entre les électrodes (13-14) sont détectées par un appareillage électronique auquel le second bobinage est relié.

2. Détecteur de particules selon la revendication 1, caractérisé en ce que le premier (5) et le second (6) bobinages sont bobinés sur des carcasses en un matériau ayant une forte perméabilité magnétique, placées en regard l'une de l'autre respectivement sur le bouchon amovible et sur le carter de la machine.

3. Détecteur de particules selon l'une des revendications 1 ou 2, caractérisé en ce que l'appareillage électronique est constitué d'une boucle d'asservissement comportant un oscillateur (18) contrôlé en tension dont la fréquence est asservie de manière à correspondre à la résonnance d'un circuit LC (15-17) incorporant le second bobinage (6), la tension de commande de l'oscillateur contrôlé (18) étant également utilisée pour la commande de la signalisation.

4. Détecteur de particules selon l'une des revendications 1 à 3, caractérisé en ce que le premier bobinage (5) est en permanence refermé sur une résistance montée en parallèle avec les électrodes.

**Patentansprüche**

1. Partikeldetektor, der an einem abnehmbaren, in den Ölkreis (4) einer Maschine eintauchenden magnetischen Stopfen (1) angeordnet ist, bestehend aus einerseits einem Permanentmagneten (3) zum Festhalten von Metallpartikeln, die von dem Öl mitgeschleppt werden und durch den Verschleiß von beweglichen Teilen entstehen, mit denen das Öl in Berührung gekommen ist, und andererseits zwei Elektroden (13, 14), die zu beiden Seiten des Permanentmagneten angeordnet sind und von denen zumindest eine elektrisch isoliert ist, so daß sich die von dem Schmieröl mitgeschleppten Metallpartikel zwischen den Elektroden sammeln und zwischen diesen eine elektrische Verbindung herstellen können,

**dadurch gekennzeichnet,**

daß der abnehmbare magnetische Stopfen eine erste Spule (5) trägt, deren Wicklungsenden mit den genannten Elektroden (13, 14) verbunden sind und die mit einer von dem Gehäuse der Maschine getragenen zweiten Spule (6) induktiv gekoppelt ist, deren durch die Ansammlung von Metallpartikeln zwischen den Elektroden (13-14) bewirkte Induktivitätsänderungen von einem elektronischen Gerät detektiert werden, mit dem die zweite Spule verbunden ist.

2. Partikeldetektor nach Anspruch 1, dadurch gekennzeichnet, daß die erste (5) und die zweite Spule (6) auf Körpern aus einem material mit großer magnetischer Permeabilität gewickelt sind, die in einander gegenüberliegenden Positionen an dem abnehmbaren Stopfen bzw. an dem Gehäuse der Maschine angeordnet sind.

3. Partikeldetektor nach einem der Ansprüche 1 oder 2, dadurch gekennzeichnet, daß das elektronische Gerät eine Regelschleife besitzt, die einen spannungsgesteuerten Oszillator (18) aufweist, dessen Frequenz so geregelt wird, daß sie der Resonanzfrequenz einer LC-Schaltung (15-17) entspricht, die die zweite Spule (6) enthält, wobei die Steuerspannung des gesteuerten Oszillators außerdem zur Steuerung der Signalisierung dient.

4. Partikeldetektor nach Anspruch 1 bis 3, dadurch gekennzeichnet, daß die erste Spule (5) ständig über einen Widerstand geschlossen ist, der mit den Elektroden parallel geschaltet ist.

## Claims

1. Particle detector placed on a removable magnetic plug (1), immersed in the oil circuit (4) of a machine, comprising, on the one hand, a permanent magnet (3) designed to retain metal particles transported by the oil and resulting from the wear of moving parts with which the oil has been in contact and, on the other hand, two electrodes (13, 14) placed either side of the permanent magnet and of which at least one is electrically insulated, in such a manner that the metallic particles carried by the lubricating oil accumulate between the electrodes and are liable to form between these latter an electrical path, characterised in that the removable magnetic plug carries a first coil (5) whose ends are connected to the said electrodes (13, 14), the said first coil (5) being inductively coupled to a second coil (6) carried on the casing (2) of the machine and the variations in whose inductance due to the build up of metallic particles between the electrodes (13, 14) are detected by an electronic apparatus to which the second coil is connected.

2. Particle detector in accordance with Claim 1, characterised in that the first (5) and the second (6) coils are wound on cores in a material with a high magnetic permeability, placed facing each other respectively on the removable plug and on the casing of the machine.

3. Particle detector in accordance with either of Claims 1 or 2, characterised in that the electronic apparatus is made up of a control loop comprising a voltage-controlled oscillator (18) whose frequency is controlled so as to correspond to the resonance frequency of a L.C. circuit (15-17) incorporating the second coil (6), the control voltage of the controlled oscillator (18) being also used for controlling the signalling system.

4. Particle detector in accordance with one of Claims 1 to 3, characterised in that the first coil (5) is permanently closed by a resistor mounted in parallel with the electrodes.

FIG : 1

FIG : 2

FIG : 4

6

FIG : 3